# DEMANDE DE BREVET EUROPEEN

(11) **EP 3 882 892 A1**
(43) Date de publication de la demande: **22.09.2021**
(21) Numéro de dépôt: 21163152.8
(22) Date de dépôt: 17.03.2021
(51) Int. Cl.: G09B 1/00, A63F 9/10, A63F 9/12, G09B 1/36

(54) **FRISE CHRONOLOGIQUE MODULAIRE**

(30) Priorité: 17.03.2020 FR 2002621
(71) Demandeur: Les Mètres du Temps, 1205 Genève (CH)
(72) Inventeur: SEILLIERE, Jean-Baptiste, 1292 Chambesy (CH); RODET, Alexis, 1205 Genève (CH)
(74) Mandataire: Touroude & Associates

(57) **Abrégé**

L'invention concerne un élément (1, 2) d'une frise chronologique comportant plusieurs éléments (1, 2) de frise à assembler les uns avec les autres. L'élément (1, 2) de frise comportant une base (3) à quatre côtés (5, 6, 7, 8) et un système d'assemblage (4) périphérique à quatre organes d'emboitement (9, 11, 13, 15). Un premier organe d'emboitement (9) et un deuxième organe d'emboitement (11) sont situés respectivement sur un premier côté (5) et un deuxième côté (6). Un troisième organe d'emboitement (13), en forme de languette (14), est en saillie d'un troisième côté (7). Un quatrième organe d'emboitement (15) est en forme d'évidement (16) ménagé dans un quatrième côté (8) et est complémentaire de la languette (14). La languette (14) s'étend en saillie du troisième côté (7) et l'évidement (16) est formé à partir du quatrième côté (8).

## Description

Le contexte technique de la présente invention est celui des supports pédagogiques et jeux éducatifs, et plus particulièrement des échelles temporelles ludo-éducatives permettant de représenter la simultanéité et à la chronologie d'événements et personnages historiques. Plus particulièrement, l'invention a trait à un élément d'une frise chronologique.

Lorsqu'on appréhende une discipline par ses événements et par ses synchronies, il est courant d'utiliser comme support une frise chronologique. En effet, la frise chronologique est un outil permettant de représenter de l'information selon une échelle temporelle donnée. La frise chronologique sert à représenter de façon linéaire des dates et des périodes de référence, et d'y indexer différents types d'événements, de protagonistes ou de synchronies. Ces frises chronologiques offrent un support visuel efficace pour appréhender la connaissance, l'ordonnance et le déroulement de l'Histoire de l'humanité. Cet outil est ainsi utile à la compréhension d'une succession d'événements et est également un support d'apprentissage et d'étude éprouvé.

Dans l'état de la technique, on connait des frises chronologiques illustrées, formées d'une bande panoramique pliante ou enroulable sur elle-même. Cette bande panoramique référence différents repères temporels et des informations thématiques y sont inclues sous forme de textes et d'illustrations. Ces frises chronologiques permettent d'avoir une vue d'ensemble sur une thématique donnée ou un regroupement de thématiques données. On trouve des frises chronologiques dédiées à des périodes spécifiques (la Préhistoire, l'Antiquité, le Moyen-Âge, les temps Modernes), à des zones géographiques délimitées (l'Histoire de France, l'Histoire du continent Américain), à des disciplines particulières (les grands peintres, l'Arts au cours des siècles, les grandes inventions, les Mathématiques), ou ayant des thématiques combinées (les mouvements artistiques en Europe de la Renaissance à nos jours, les guerres et les progrès techniques).

L'inconvénient de ces frises chronologiques illustrées est qu'elles ne sont pas modulables. Elles sont établies en fonction d'une thématique donnée, d'un regroupement de thématiques et/ou d'une période de temps donnée. Différentes frises chronologiques doivent être comparées lorsque l'on souhaite croiser des informations qui ne sont pas référencées sur une même frise chronologique. Il peut être nécessaire de fabriquer *de novo* une frise chronologique pour la personnaliser, notamment si les échelles de temps sont différentes dans les frises chronologiques que l'on souhaite combiner.

On connait par ailleurs des frises chronologiques vierges, autrement dit uniquement dotées de repères temporels. Ces frises chronologiques sont des supports sur lesquels peuvent être fixés, à l'envie, toutes sortes de documents illustratifs. Il est connu de fixer des documents sur des frises chronologiques vierges au moyen de ruban adhésif et/ou d'attaches auto-agrippantes et/ou de pâte à fixer et/ou de colle. Ces frises chronologiques permettent ainsi d'être un support modulable en fonction de la thématique dont on souhaite visualiser la chronologie.

Un inconvénient de ces frises chronologiques réside dans le fait qu'il est nécessaire de faire le rapprochement entre le document et sa position sur la frise chronologique, ce qui peut demander une recherche préalable ou des connaissances en la matière. Cela peut aussi être source d'erreur et nécessiter un recours à vérifications.

On connait par ailleurs des frises chronologiques prenant la forme de puzzle d'observation constitués d'éléments découpés irrégulièrement, dites pièces de puzzle, qu'il faut assembler pour reconstituer une illustration. Ces frises chronologiques permettent, par le jeu, d'assembler différentes pièces de puzzle de sorte à recréer une chronologie décrivant différentes périodes de l'Histoire. Ces frises chronologiques sont monodimensionnelles, chaque pièce de puzzle s'attachant à une pièce de puzzle précédente selon une direction coïncidant avec un axe temporel de la frise chronologique.

Un inconvénient de ces frises chronologiques est que, une fois les pièces du puzzle assemblées, une seule illustration est reconstituée. Tout comme les frises chronologiques illustrées précitées, les frises chronologiques en forme de puzzle sont non-modulables, bien que ludiques.

On connait par ailleurs des puzzles en forme de frise chronologique, dits puzzles-frises, à destination des très jeunes enfants. Ces puzzles-frises peuvent représenter tout type d'illustration en lien ou non avec une certaine chronologie. On trouve notamment des puzzles-frises illustrant les saisons, le déroulement d'une scénette ou encore une suite numéraire et/ou alphabétique. Ces puzzles-frises sont constitués d'éléments découpés régulièrement, dits pièces de puzzle-frise, qu'il faut assembler par emboitement linéaire pour reconstituer l'illustration. Les pièces d'un puzzle-frise s'assemblent au moins deux à deux. Une pièce de puzzle-frise comprend au moins deux bordures droites opposées l'une à l'autre, et au moins une bordure d'emboitement destinée à s'assembler avec une bordure d'emboitement d'une autre pièce de puzzle-frise qui lui est complémentaire. De tels puzzle-frises sont monodimensionnels, chaque pièce étant attaché à une ou deux pièces adjacentes et à l'opposé l'une de l'autre. De telles pièces de puzzle-frise sont destinées à être aisément manipulables par les jeunes enfants. En ce sens, ces puzzles-frises ont une complexité d'assemblage qui est adaptée à la toute petite-enfance. Les pièces d'un tel puzzle-frise peuvent être interchangeable, mais seul leur juste positionnement les unes par rapport aux autres permet de reconstituer une illustration cohérente. Ces puzzles-frises constituent un outil d'apprentissage permettant à cette catégorie d'enfants d'appréhender une résolution de problème, d'activer des capacités de raisonnement, et de solliciter leur motricité fine par une coordination visuelle et manuelle. En ce sens, ces frises déclinées en puzzle font partie d'un contexte technique différent des échelles temporelles ludo-éducative visées par la présente invention.

La présente invention a pour objet de proposer un nouvel élément d'une frise chronologique afin de répondre au moins en grande partie aux problèmes précédents et de conduire en outre à d'autres avantages.

Un autre but de l'invention est de proposer des éléments d'une frise chronologique compatibles entre eux et selon une variété de combinaison prédéterminée.

Un autre but de l'invention est de proposer des éléments d'une frise chronologique configurés pour former plusieurs lignes temporelles thématiques combinables entre elles afin de constituer une frise chronologique modulable qui permet de comparer plusieurs thématiques d'une seule région géographique au fil du temps, ou la même thématique dans différentes régions géographiques au fil du temps, ou différentes thématiques dans différentes régions géographiques au fil du temps.

Un autre but de l'invention est de proposer un élément d'une frise chronologique simple, tant du point de vue de sa mise en œuvre, que du point de vue de sa fabrication.

Un autre but de l'invention est de proposer un élément d'une frise chronologique qui soit peu onéreux, de sorte à limiter le coût d'un tel élément d'une frise chronologique par rapport aux frises chronologiques connues.

Un autre but de l'invention est de proposer un élément d'une frise chronologique qui soit configuré pour limiter le nombre d'opérations nécessaire à sa fabrication, de sorte à maitriser son coût de revient.

Selon un premier aspect de l'invention, on atteint au moins l'un des objectifs précités avec un élément d'une frise chronologique comportant plusieurs éléments de frise chronologique à assembler les uns avec les autres, l'élément de frise comportant une base et un système d'assemblage situé en périphérie de la base, le système d'assemblage comprenant (i) un premier organe d'emboitement et un deuxième organe d'emboitement situés respectivement sur un premier côté et deuxième côté de la base, (ii) un troisième organe d'emboitement situé sur un troisième côté de la base, le troisième organe d'emboitement prenant la forme d'une languette qui s'étend en saillie du troisième côté, (iii) un quatrième organe d'emboitement situé sur un quatrième côté de la base, le quatrième organe d'emboitement prenant la forme d'un évidement formé à partir du quatrième côté, le quatrième organe d'emboitement autorisant un engagement du troisième organe d'emboitement d'un premier élément de frise avec le quatrième organe d'emboitement d'un deuxième élément de frise. En d'autres termes, le troisième organe d'emboitement et le quatrième organe d'emboitement ont des formes complémentaires l'une de l'autre.

L'élément de frise selon l'invention forme une unité particulière d'une frise chronologique, plusieurs éléments de frise chronologique selon l'invention et assemblés les uns avec les autres formant collectivement une frise chronologique. Notamment, l'évidement formé par le quatrième organe d'emboitement du premier élément de frise permet de coopérer par engagement avec la languette formée par le troisième organe d'emboitement du deuxième élément de frise.

Dans l'élément de frise selon l'invention, le premier organe d'emboitement et le deuxième organe d'emboitement sont avantageusement non-complémentaires l'un de l'autre. Le premier organe d'emboitement est distinct du deuxième organe d'emboitement, du troisième organe d'emboitement et du quatrième organe d'emboitement. Le deuxième organe d'emboitement est distinct du troisième organe d'emboitement et du quatrième organe d'emboitement.

L'élément de frise selon l'invention est configuré pour pouvoir supporter une représentation d'informations graphiques. Ces informations prennent la forme d'une combinaison spécifique entre, d'une part, une thématique dans une région géographique donnée et, d'autre part, une période temporelle donnée. Dans une frise chronologique formée d'éléments de frise chronologique conforme au premier aspect de l'invention, chaque élément de frise supporte des informations distinctes et complémentaires.

L'élément de frise selon l'invention est configuré pour s'assembler, au niveau de son premier organe d'emboitement, invariablement, avec un unique autre élément de frise. L'élément de frise selon l'invention est configuré pour s'assembler, au niveau de son deuxième organe d'emboîtement, invariablement, avec encore un unique élément de frise, distinct de l'élément de frise s'emboîtant avec le premier organe d'emboîtement. Ainsi, un tel élément de frise caractérisant une période temporelle donnée peut être positionné, dans une frise chronologique, relativement à d'autres élément de frise caractérisant chacun une autre période temporelle donnée. La période temporelle est un intervalle de temps. Selon des exemples non limitatifs, la période temporelle est une année précise, une période référencée en années (1940 à 1949, 1950 à 1959, ...), un siècle (XVème, XVIème, XVIIème, ...) ou une époque (Antiquité, Moyen-Âge, Temps Modernes, Époque contemporaine). En d'autres termes, le premier organe d'emboitement et le deuxième organe d'emboitement de l'élément de frise selon l'invention permettent d'accoupler à un premier élément de frise des éléments de frise qui représentent des périodes temporelles directement adjacentes à celle représentée sur le premier élément de frise. Les premiers et deuxièmes organes d'emboitement contraignent ainsi l'assemblage des éléments de frise de manière à construire un ensemble temporellement cohérent d'éléments de frise : il est possible d'accoupler un et un seul élément de frise par l'intermédiaire du premier organe d'emboitement ; et il est possible d'accoupler un et un seul autre élément de frise par l'intermédiaire du deuxième organe d'emboitement.

Complémentairement, l'élément de frise selon l'invention est configuré pour s'assembler, au niveau de son troisième organe d'emboitement, avec une multitude d'autres éléments de frise complémentaires et au niveau de son quatrième organe d'emboîtement, avec la même multitude d'autres éléments de frise complémentaires. Ainsi, un tel élément de frise caractérisant une thématique pour une région géographique donnée peut être relié, dans une frise chronologique, à une multitude d'autres éléments de frise qui ont trait soit à une même thématique mais pour une région géographie différente, soit à une thématique différente mais pour une même région géographique, soit à une thématique différente et pour une région différente. En d'autres termes, pour une période temporelle donnée de l'élément de frise, les troisièmes et quatrièmes organes d'emboitement permettent d'accoupler une pluralité d'éléments de frises issus d'une même période temporelle. Pour une période temporelle donnée, chaque troisième et quatrième organe d'emboitement permet l'emboîtement d'un élément de frise avec un autre élément de frise traitant d'une thématique d'une région géographique que l'utilisateur choisit d'assembler pour avoir une vision d'ensemble qu'il est à même de commander au gré de sa curiosité ou de ses besoins au cours de ses manipulations. Ainsi, tous les éléments de frise d'une même période temporelle donnée partagent les mêmes troisièmes et quatrièmes organes d'emboitement.

L'invention conforme à son premier aspect permet ainsi avantageusement d'avoir un élément de frise ayant un degré de liberté d'assemblage supérieur par rapport à des pièces de puzzle classique. Un tel élément de frise est cohérent avec un assemblage linéaire contraint au niveau du premier organe d'emboitement et du deuxième organe d'emboitement, selon la composante temporelle propre à une frise chronologique. Un tel élément de frise autorise pourtant une variété d'assemblages - thématiques et/ou géographiques - au niveau du troisième organe d'emboitement et du quatrième organe d'emboitement.

L'élément de frise conforme au premier aspect de l'invention comprend avantageusement au moins un des perfectionnements ci-dessous, les caractéristiques techniques formant ces perfectionnements pouvant être prises seules ou en combinaison :
- l'évidement formant le quatrième organe d'emboitement a une forme analogue à celle de la languette formant le troisième organe d'emboitement afin de collaborer par emboitement. L'élément de frise, dit premier élément de frise, s'engage avec le deuxième élément de frise par complémentarité de forme selon un système d'engagement mâle/femelle. L'évidement forme une partie femelle et la languette forme une partie mâle complémentaire de la partie femelle. Une collaboration par emboitement est destinée à fiabiliser l'appariement de la partie mâle et de la partie femelle. Une collaboration par emboitement est une fixation amovible, la partie mâle pouvant être détachée de la partie femelle et rattachée à la partie femelle. L'évidement formé par le quatrième organe d'emboitement du premier élément de frise est destiné à coopérer par complémentarité de formes avec la languette formée par le troisième organe d'emboitement deuxième élément de frise ;
- le troisième côté de l'élément de frise à partir duquel s'étend le troisième organe d'emboitement est opposé au quatrième côté sur lequel le quatrième organe d'emboitement est formé. Dans l'élément de frise selon l'invention, le troisième côté de la base est opposé au quatrième côté de la base ;
- le troisième côté et le quatrième côté sont parallèles entre eux ;
- la base de l'élément de frise a une forme d'un quadrilatère. Le troisième côté de la base relie le premier côté de la base au deuxième côté de la base. Le quatrième côté de la base relie le premier côté de la base au deuxième côté de la base. Préférentiellement, la base de l'élément de frise a une forme d'un quadrilatère rectangle ;
- le troisième organe d'emboitement et le quatrième organe d'emboitement sont centrés relativement à un même axe simultanément perpendiculaire au troisième côté et au quatrième côté de l'élément de frise. Dans la frise chronologique formée de tels éléments de frise chronologique, les éléments de frise chronologique forment une série verticale régulière. En d'autres termes, tous les éléments de frise correspondant à une même période temporelle et pour des thématiques associées à des régions géographiques différentes, c'est-à-dire tous les éléments de frises qui partagent les mêmes troisièmes et quatrièmes organes d'emboitement, sont horizontalement alignés les uns par rapport aux autres. Cette configuration avantageuse permet de faciliter la construction d'une frise chronologique et de faciliter l'étude des synchronies, tandis que l'assemblage de deux éléments de frises adjacents par l'intermédiaire de leurs premiers et deuxièmes organes d'emboitement permet de former une série horizontale qui décrit un axe temporel, chaque élément de frise représentant une période temporelle suivante ou précédente à un élément de frise adjacent ;
- le système d'assemblage est configuré pour assurer un emboitement autobloquant d'un premier élément de frise avec un deuxième élément de frise. En d'autres termes, le premier organe d'emboitement du premier élément de frise est configuré pour s'emboiter de manière autobloquante avec le deuxième organe d'emboitement de l'élément de frise. De manière complémentaire ou alternative, le troisième organe d'emboitement du premier élément de frise est configuré pour s'emboiter de manière autobloquante avec le quatrième organe d'emboitement de l'élément de frise. L'emboitement autobloquant permet de fixer solidairement le premier élément de frise avec le deuxième élément de frise et d'éviter que le premier élément de frise ne se détache du deuxième élément de frise de manière non désirée. L'emboitement autobloquant fiabilise l'engagement du premier élément de frise avec le deuxième élément de frise. L'emboitement autobloquant garantit une meilleure résistance aux contraintes mécaniques éventuelles, notamment au déplacement de plusieurs éléments de frise assemblés ;
- l'élément de frise comporte une face supérieure lisse afin de permettre l'impression d'illustrations spécifiques. A titre non limitatif, on peut citer comme exemple d'illustrations : des inscriptions alpha- numériques, des signes conventionnels, des représentation graphiques, des schémas, des dessins, des photographies ;
- les illustrations comprennent au moins un signe distinctif caractérisant une période temporelle. Le signe distinctif caractérisant la période temporelle permet à un utilisateur de repérer une période temporelle donnée. Elle facilite le classement relatif de plusieurs éléments de frise ;
- selon un premier mode de réalisation, la base de l'élément de frise comprend le signe distinctif caractérisant la période temporelle. Selon un deuxième mode de réalisation alternatif ou complémentaire au premier mode de réalisation, le système d'assemblage de l'élément de frise comprend le signe distinctif caractérisant la période temporelle. Avantageusement le troisième organe d'emboitement et le quatrième organe d'emboîtement forment chacun un contour du signe distinctif caractérisant la période temporelle ;
- les illustrations comprennent au moins un signe distinctif caractérisant une thématique d'une région géographique donnée. Le signe distinctif caractérisant la thématique de la région géographique donnée permet à un utilisateur d'identifier une thématique donnée de la région géographique donnée. Elle facilite le classement relatif de plusieurs éléments de frise. A titre non limitatif, le signe distinctif caractérisant la thématique de la région géographique prend la forme d'un signe graphique et/ou d'une illustration et/ou d'une couleur de la base de l'élément de frise ;
- selon un premier mode de réalisation, le signe distinctif caractérisant la thématique de la région géographique est formé par la base de l'élément de frise. Selon un deuxième mode de réalisation alternatif ou complémentaire au premier mode de réalisation, le signe distinctif caractérisant la thématique de la région géographique est formé par le système d'assemblage de l'élément de frise ;
- le système d'assemblage comporte un système de fixation temporaire configuré pour permettre de fixer de manière détachable le premier organe d'emboitement avec le deuxième organe d'emboitement et/ou pour permettre de fixer de manière détachable le troisième organe d'emboitement avec le quatrième organe d'emboitement. Le système de fixation temporaire est amovible, en ce sens chaque élément peut être détachés l'un de l'autre et rattachés l'un à l'autre. Le système de fixation temporaire renforce l'emboitement du premier organe d'emboitement de l'élément de frise dans le deuxième organe d'emboitement d'un autre élément de frise et/ou l'emboitement du quatrième organe d'emboitement de l'élément de frise avec le troisième organe d'emboitement du deuxième élément de frise. En particulier, le système de fixation permet de fiabiliser ces emboitements. Le système de fixation temporaire est utile lorsque la frise chronologique comprenant l'élément de frise conforme au premier aspect de l'invention doit être déplacée, ou lorsque l'élément de frise conforme au premier aspect de l'invention est positionné verticalement dans une frise chronologique, comme peut l'être une frise chronologique fixée à un mur ;
- le système de fixation temporaire est du type adhésif ou magnétique ou velcro. Un tel système de fixation temporaire assure une fixation détachable fiable. Un tel système de fixation temporaire est facilement détachable. Un tel système de fixation temporaire facilite la modularité d'assemblage dans la frise chronologique comprenant les éléments de fixation selon l'invention. A titre d'exemple non limitatif, un système de fixation temporaire du type adhésif prend la forme d'un ruban adhésif et/ou d'une pâte adhésive. On comprend qu'un système de fixation temporaire magnétique prend la forme d'au moins un aimant. On comprend qu'un système de fixation temporaire velcro prend la forme d'une attache auto-agrippante et/ou d'une bande à fixation mécanique par crochets et boucles textiles ;
- l'élément de frise prend la forme d'une plaque. L'élément de frise est alors une pièce globalement plane, d'épaisseur constante, et qui s'étend dans un plan principal. Un tel élément de frise est peu encombrant et a une fabrication simplifiée ;
- une épaisseur de la plaque est comprise entre 0,1 mm et 5 mm. La plaque formant l'élément de frise comprend deux faces, une face supérieure de l'élément de frise opposée à une face inférieure de l'élément de frise, et l'épaisseur de la plaque formant l'élément de frise selon le premier aspect de l'invention est la distance la plus courte entre la face supérieure et la face inférieure de la plaque. La face supérieure de la plaque est celle précitée sur laquelle les illustrations de l'élément de frise sont adossées. Préférentiellement, la plaque formant l'élément de frise a une épaisseur égale à 0,5 mm ;
- une face supérieure de l'élément de frise est recouverte d'un film protecteur transparent. La face supérieure de l'élément de frise est celle précitée sur laquelle des informations graphiques sont imprimées. La face supérieure de l'élément de frise est opposée à la face inférieure de l'élément de frise. La face supérieure de l'élément de frise est destinée à être orientée du côté d'un utilisateur de l'élément de frise. La face inférieure de l'élément de frise est destinée à être orientée du côté d'une surface support de la frise chronologique, tel une table, un sol ou un mur. Le film protecteur transparent permet de protéger l'élément de frise de multiples manipulations. En ce sens, il renforce l'élément de frise et en augmente la durabilité. Il prévient l'altération de la face supérieure de l'élément de frise. Notamment, le film protecteur transparent prévient l'altération des illustrations que la face supérieure de l'élément de frise peut comprendre. Par sa transparence, le film protecteur transparent garantit une lisibilité des illustrations par l'utilisateur. Par exemple, le film protecteur transparent prévient des rayures ou évite que les illustrations ne s'estompent. Le film protecteur est avantageusement fixé à la face supérieure de l'élément de frise de façon non amovible. Le film protecteur transparent permet de rigidifier l'élément de frise. Le film protecteur transparent est avantageusement formé de matériau plastique ;
- l'élément de frise est formé d'un matériau choisi parmi le carton et/ou le plastique et/ou le métal ;
- l'élément de frise est obtenu par emboutissage ou par poinçonnage. Ces procédés de formage industriels permettent d'obtenir à moindre coût un grand nombre d'unités identiques par répétition de l'utilisation d'un même gabarit.

Selon un deuxième aspect de l'invention, il est proposé un ensemble chronologique comportant une pluralité d'éléments de frise chronologique conforme au premier aspect de l'invention ou selon l'un quelconque de ses perfectionnements, un premier élément de frise étant assemblé à un deuxième élément de frise directement adjacent par collaboration de formes complémentaires de leurs premiers organes d'emboitement et deuxièmes organes d'emboitement respectifs.

Dans le sens de l'invention, l'ensemble chronologique est formé par plusieurs éléments de frise appartenant à une même série thématique d'une région géographique donnée et liés aux autres deux à deux par collaboration de leurs premier et deuxièmes organes d'emboitement, de sorte à former un ensemble chronologique cohérents. La pluralité d'éléments de frise chronologique comprend le premier élément de frise et le deuxième élément de frise. La pluralité d'éléments de frise chronologique comprend par exemple six éléments de frise chronologiques. Un tel ensemble chronologique forme ainsi une ligne temporelle thématique pour une région géographique.

On comprend que le premier organe d'emboitement du premier élément de frise collabore par engagement de forme complémentaire avec le deuxième organe d'emboitement du deuxième élément de frise directement adjacent. Le premier élément de frise s'engage avec le deuxième élément de frise par complémentarité de forme selon un système d'engagement mâle/femelle. Par ailleurs le deuxième organe d'emboitement du premier élément de frise collabore par engagement de forme complémentaire avec le premier organe d'emboitement d'un troisième élément de frise directement adjacent au premier élément de frise. Le premier élément de frise s'engage avec le troisième élément de frise par complémentarité de forme selon un système d'engagement mâle/femelle.

Une collaboration par emboitement fiabilise l'appariement de la partie mâle et de la partie femelle. Une collaboration par emboitement est une fixation amovible, la partie mâle pouvant être détachée de la partie femelle et rattachée à la partie femelle.

Par convention, l'ensemble chronologique conforme au deuxième aspect de l'invention formant une ligne temporelle thématique d'une région géographique représente un axe horizontal, aussi appelé axe chronologique. Les premiers organes d'emboitement et les deuxièmes organes d'emboitement sont des organes d'emboitement dits « horizontaux ». Par opposition, les troisièmes organes d'emboitement et les quatrièmes organes d'emboitement sont des organes d'emboitement dits « verticaux ». Ainsi, pour une période temporelle donnée représentée par un premier élément de frise d'un premier ensemble chronologique donné, d'autres éléments de frises issus d'autres ensembles chronologiques sont configurés pour pouvoir s'accoupler avec le premier élément de frise s'ils partagent la même période temporelle pour d'autres thématiques d'autres régions géographiques. En d'autres termes, ces autres éléments de frise partagent les mêmes organes d'emboitement verticaux afin de pouvoir s'accoupler les uns avec les autres selon un axe vertical, aussi appelé axe thématique. Dans l'ensemble chronologique conforme au deuxième aspect de l'invention, pour un ensemble chronologique donné, l'élément de frise à gauche - le premier élément de frise - représente une période temporelle plus ancienne comparé à l'élément de frise à droite - le deuxième élément de frise - qui représente une période temporelle plus récente. De manière analogue pour un élément de frise donné, l'élément de frise situé directement au-dessus ou directement en-dessous représente une thématique différente pour une région géographique différente et pour une même période temporelle que celle de l'élément de frise donné.

Avantageusement, les organes d'emboitement verticaux d'un élément de frise sont de plus en plus décalés vers la droite de la base dudit élément de frise, au fur et à mesure que l'élément de frise qui le comprend est associé à une période temporelle récente de l'axe chronologique. Autrement dit, dans un ensemble chronologique donné, le troisième organe d'emboitement et le quatrième organe d'emboitement sont plus proches du deuxième côté de l'élément de frise dans le deuxième élément de frise que dans le premier élément de frise, lorsque le deuxième élément de frise représente une période plus récente que celle représentée sur le premier élément de frise.

Dans l'ensemble chronologique conforme au deuxième aspect de l'invention, les éléments de frise chronologique sont contraints dans leur assemblage. Autrement dit, dans l'ensemble chronologique conforme au deuxième aspect de l'invention, seul le premier organe d'emboitement d'un des éléments de frise chronologique peut être emboité avec le deuxième organe d'emboitement d'un unique autre élément de frise. Ainsi, les éléments de frise chronologique de l'ensemble chronologique conforme au deuxième aspect de l'invention s'emboitent successivement pour respecter une chronologie donnée.

On comprend que deux lignes temporelles thématiques distinctes forment chacune un ensemble chronologique conforme au deuxième aspect de l'invention distinct. Pour un premier élément de frise compris dans un premier ensemble chronologique, le premier organe d'emboitement sera différent du premier organe d'emboitement d'un premier élément de frise compris dans un deuxième ensemble chronologique. Pour un premier élément de frise compris dans un premier ensemble chronologique, le deuxième organe d'emboitement sera différent du deuxième organe d'emboitement d'un premier élément de frise compris dans un deuxième ensemble chronologique.

Selon un troisième aspect de l'invention, il est proposé une frise chronologique comportant une pluralité d'ensembles chronologiques conforme au deuxième aspect de l'invention ou selon l'un quelconque de ses perfectionnements, chaque élément de frise d'un premier ensemble chronologique étant assemblé aux éléments de frise chronologique d'un deuxième ensemble chronologique directement adjacent par collaboration de formes complémentaires de leurs troisièmes organes d'emboitement et quatrièmes organes d'emboitement respectifs.

On comprend que le troisième organe d'emboitement du premier élément de frise du premier ensemble chronologique collabore par engagement de forme complémentaire avec le quatrième organe d'emboitement du premier élément de frise d'un autre ensemble chronologique, par exemple d'un deuxième ensemble chronologique ou d'un troisième ensemble chronologique. Le troisième organe d'emboitement du premier élément de frise du premier ensemble chronologique collabore par engagement de forme complémentaire avec le quatrième organe d'emboitement du premier élément de frise d'un autre ensemble chronologique, non-engagé avec le premier élément de frise du premier ensemble chronologique, par exemple d'un deuxième ensemble chronologique ou d'un troisième ensemble chronologique.

D'une manière générale, les éléments de frise d'un premier ensemble chronologique sont accouplés avec les éléments de frise d'un second ensemble chronologique et d'une même période temporelle par leurs troisièmes et quatrièmes organes d'emboitement respectifs. En d'autres termes, pour une période temporelle donnée, chaque troisième organe d'emboitement d'un élément de frise s'engage avec un quatrième organe d'emboitement d'un élément de frise d'un autre ensemble chronologique. Cet accouplement met en relation deux éléments de frise d'une même période temporelle donnée et traitant (i) de la même thématique pour deux régions géographiques différentes, ou (ii) de deux thématiques différentes pour une même région géographique, ou (iii) de deux thématiques différentes pour deux régions différentes. Comme évoqué précédemment, cet accouplement est avantageusement obtenu par complémentarité de forme et selon un système d'engagement mâle/femelle. Une collaboration par emboitement fiabilise l'appariement de la partie mâle et de la partie femelle. Une collaboration par emboitement est une fixation amovible, la partie mâle pouvant être détachée de la partie femelle et rattachée à la partie femelle.

Les éléments de frise chronologique qui s'emboitent au niveau de leur troisième organe d'emboitement et de leur quatrième organe d'emboîtement réfèrent à une même période temporelle. Ils sont chacun compris dans un ensemble thématique et géographique distinct.

Ainsi, les éléments de frise chronologique s'emboitant au niveau de leur troisième organe d'emboitement et de leur quatrième organe d'emboîtement réfèrent à une thématique différente et relative à d'autres régions géographiques. Les éléments de frise chronologique s'emboitant au niveau de leur troisième organe d'emboitement et de leur quatrième organe d'emboîtement forment un alignement. Cet alignement est en forme de colonne, verticale par convention et par rapport aux ensembles chronologiques qui sont horizontaux. Comme évoqué précédemment, l'alignement vertical de des éléments de frises issus de plusieurs ensembles chronologiques forment un axe thématique de la frise chronologique.

Ces éléments de frise chronologique qui référent à une même période temporelle peuvent être assemblés les uns avec les autres comme ils sont tous complémentaires les uns avec les autres. Autrement dit, pour une période temporelle donnée, ils sont interchangeables.

Pour une période temporelle donnée et pour un premier élément de frise compris dans le premier ensemble chronologique, le troisième organe d'emboitement est identique au troisième organe d'emboitement du premier élément de frise compris dans le deuxième ensemble chronologique. Pour une période temporelle donnée et pour un premier élément de frise compris dans le premier ensemble chronologique, le quatrième organe d'emboitement est identique au quatrième organe d'emboitement du premier élément de frise compris dans le deuxième ensemble chronologique.

Selon un quatrième aspect de l'invention, il est proposé un support pour ensemble chronologique, le support étant configurée pour ranger un ou plusieurs éléments de frise chronologique d'un ensemble chronologique conforme au deuxième aspect de l'invention ou selon l'un quelconque de ses perfectionnements. Le support permet de ranger et/ou classer et/ou répertorier les éléments de frise chronologique d'un même ensemble chronologique.

Le support pour ensemble chronologique conforme au quatrième aspect de l'invention comprend avantageusement au moins un des perfectionnements ci-dessous, les caractéristiques techniques formant ces perfectionnements pouvant être prises seules ou en combinaison :
- le support pour frise chronologique comprend une pluralité de planches assemblées les unes aux autres par un organe de fixation des planches, chaque planche du support comprenant au moins un logement configuré pour loger un élément de frise conforme au premier aspect de l'invention. Le support pour frise chronologique prend la forme d'un cahier ou d'un classeur. Le logement de chaque planche du support est destiné à collaborer par emboitement avec l'élément de frise. Le logement est spécifique au système d'assemblage de l'élément de frise. En ce sens, le logement est une empreinte de l'élément de frise. Avantageusement, chaque planche du support comprend deux logements chacun spécifiques d'un élément de frise ;
- l'organe de fixation de la pluralité de planches prend la forme d'une reliure en spirale hélicoïdale ou d'une reliure par peignes anneaux ;
- chaque planche est environ au format A4 ;
- une épaisseur de la planche est comprise entre 5 mm et 15 mm. La planche comprend deux faces, une face supérieure de la planche opposée à une face inférieure de la planche, et l'épaisseur de la planche est la distance la plus courte entre la face supérieure de la planche et la face inférieure de la planche. Préférentiellement, la planche a une épaisseur égale à 10 mm ;
- le logement a une profondeur comprise entre 0,1 mm et 15 mm. La profondeur du logement se mesure entre la face supérieure de la planche et un fond du logement orienté du côté de la face inférieure de la planche. Préférentiellement, la profondeur du logement égale à 5 mm ;
- une ouverture traverse la planche depuis le fond du logement jusqu'à la face inférieure de la planche. L'ouverture facilite le désengagement de l'élément de frise lorsque ce dernier doit être sorti du logement ;
- le support pour frise chronologique comprend une souche assemblée à la pluralité de planches et la souche comprend une amorce d'emboitement configurée pour amorcer l'assemblage d'un des éléments de frise chronologique. Par exemple, l'amorce d'emboitement est configurée pour collaborer par emboitement avec le deuxième organe d'emboitement de l'un des éléments de frise chronologique ;
- l'amorce est formée d'une languette configurée pour être engagée dans le quatrième organe d'emboitement de l'élément de frise.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig.1] illustre une vue schématique d'un élément d'une frise chronologique conforme au premier aspect de l'invention selon un premier mode de réalisation ;
[fig.2] illustre un ensemble chronologique conforme au deuxième aspect de l'invention ;
[fig.3] illustre une frise chronologique conforme au troisième aspect de l'invention selon une première variante de réalisation ;
[fig.4] illustre une frise chronologique conforme au troisième aspect de l'invention selon une deuxième variante de réalisation ;
[fig.5] illustre une vue schématique d'un élément d'une frise chronologique conforme au premier aspect de l'invention selon un deuxième mode de réalisation ;
[fig.6] illustre une frise chronologique conforme au troisième aspect de l'invention selon une troisième variante de réalisation ;
[fig.7] illustre la frise chronologique de la FIGURE 6 dans deux configurations distinctes ;
[fig.8] illustre un support conforme au quatrième aspect de l'invention dans un premier exemple de réalisation ;
[fig.9] illustre le support de la FIGURE 8 selon un autre angle de vue ;
[fig.10] illustre un support conforme au quatrième aspect de l'invention dans un deuxième exemple de réalisation.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

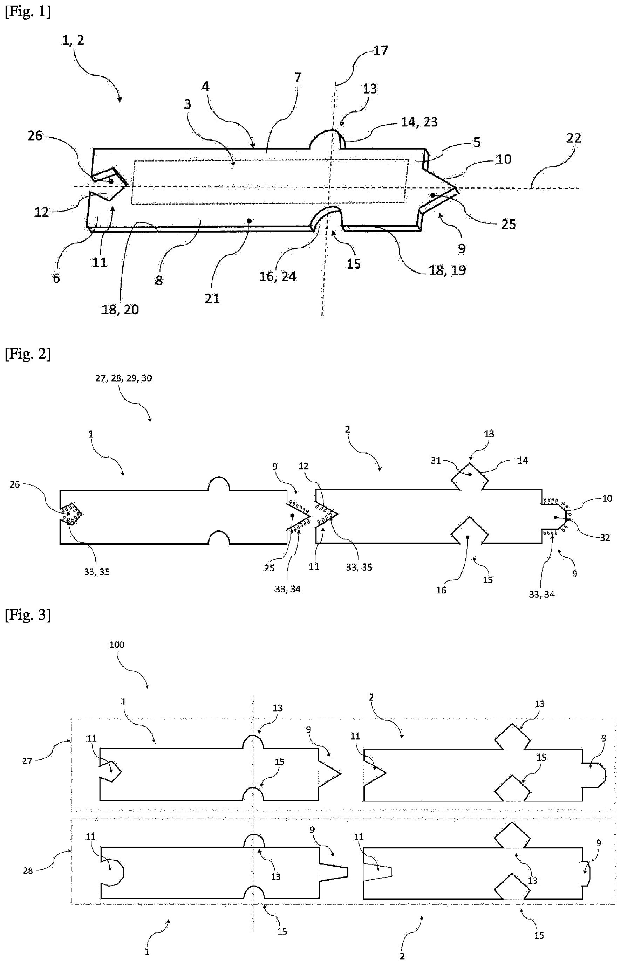

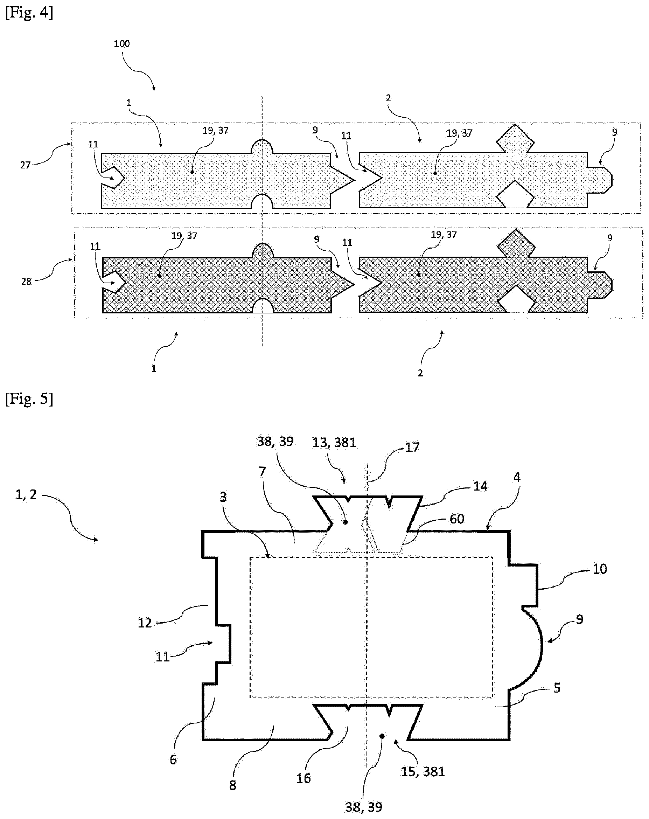

En référence aux FIGURES 1 et 5, un élément 1, 2 d'une frise chronologique conforme au premier aspect de l'invention est illustré selon deux modes de réalisation distincts. L'élément 1, 2 de frise est destiné à former une frise chronologique 100 comportant plusieurs éléments 1, 2 de frise chronologique 100 à assembler les uns avec les autres, comme le montrent les FIGURES 3 et 4, et 6 et 7.

L'élément 1, 2 de frise conforme au premier aspect de l'invention comporte une base 3 et un système d'assemblage 4 situé en périphérie de la base 3.

Le système d'assemblage 4 de l'élément 1, 2 de frise comprend un premier côté 5 opposé à un deuxième côté 6, et un troisième côté 7 opposé à un quatrième côté 8.

Le premier côté 5 du système d'assemblage 4 est un côté droit du système d'assemblage 4. Un premier organe d'emboitement 9 de la base 3 est situé sur le premier côté 5 du système d'assemblage 4. Le premier organe d'emboitement 9 de la base 3 est un organe d'emboitement horizontal. Le premier organe d'emboitement 9 de la base 3 prend la forme d'une saillie 10 qui s'étend en saillie du premier côté 5

Le deuxième côté 6 du système d'assemblage 4 est un côté gauche du système d'assemblage 4. Un deuxième organe d'emboitement 11 de la base 3 est situé sur le deuxième côté 6 du système d'assemblage 4. Le deuxième organe d'emboitement 11 de la base 3 est un organe d'emboitement horizontal. Le deuxième organe d'emboitement 11 de la base 3 prenant la forme d'un renfoncement 12 formé à partir du deuxième côté 6.

Le troisième côté 7 du système d'assemblage 4 est un côté supérieur du système d'assemblage 4. Un troisième organe d'emboitement 13 de la base 3 est situé sur le troisième côté 7 du système d'assemblage 4. Le troisième organe d'emboitement 13 de la base 3 est un organe d'emboitement vertical. Le troisième organe d'emboitement 13 de la base 3 prend la forme d'une languette 14 qui s'étend en saillie du troisième côté 7.

Le quatrième côté 8 du système d'assemblage 4 est un côté inférieur du système d'assemblage 4. Un quatrième organe d'emboitement 15 de la base 3 est situé sur le quatrième côté 8 du système d'assemblage 4. Le quatrième organe d'emboitement 15 de la base 3 est un organe d'emboitement vertical. Le quatrième organe d'emboitement 15 de la base 3 prenant la forme d'un évidement 16 formé à partir du quatrième côté 8.

Le troisième côté 7 et le quatrième côté 8 sont parallèles entre eux et sont simultanément perpendiculaires au premier côté 5 et au deuxième côté 6. Ainsi, la base 3 prend la forme d'un rectangle.

Le quatrième organe d'emboitement 15 est complémentaire du troisième organe d'emboitement 13. L'évidement 16 formant le quatrième organe d'emboitement 15 est une partie femelle ayant une forme analogue à une partie mâle correspondant à la languette 14 formant le troisième organe d'emboitement 13. Lorsqu'ils sont compris dans deux éléments 1, 2 de frise distincts, l'évidement 16 formant le quatrième organe d'emboitement 15 et languette 14 formant le troisième organe d'emboitement 13 collaborent par emboitement.

Le premier organe d'emboitement 9 est non-complémentaire du deuxième organe d'emboitement 11.

Le troisième organe d'emboitement 13 et le quatrième organe d'emboitement 15 sont centrés relativement à un même axe 17. L'axe 17 est simultanément perpendiculaire au troisième côté 7 et au quatrième côté 8 de la base 3 de l'élément 1, 2 de frise.

La FIGURE 1 montre que l'élément 1, 2 de frise conforme au premier aspect de l'invention prend la forme d'une plaque 18, avec une face supérieure 19 opposée à une face inférieure 20. La face supérieure 19 de l'élément 1, 2 de frise est recouverte d'un film protecteur transparent 21.

Le premier organe d'emboitement 9 et le deuxième organe d'emboitement 11 sont centrés relativement à un même axe longitudinal 22. L'axe longitudinal 22 est parallèle au troisième côté 7 et au quatrième côté 8 de la base 3 de l'élément 1, 2 de frise.

Dans l'élément 1, 2 de frise conforme au premier aspect de l'invention illustré en FIGURE 1, le premier organe d'emboitement 9, le deuxième organe d'emboitement 11, le troisième organe d'emboitement 13 et le quatrième organe d'emboitement 15 prennent des formes simples, comparés aux organes d'emboitement 9, 11, 13, 15 de l'élément 1, 2 de frise tel qu'illustré en FIGURE 5 qui prennent des formes plus complexes. Dans le contexte de l'invention, les formes des organes d'emboitement 9, 11, 13, 15 illustrés sur les FIGURES ne sont pas limitatives mais données uniquement à titre d'exemples d'illustration. D'une manière générale, les organes d'emboitement 9, 11, 13, 15 peuvent prendre n'importe quelle forme, pourvu qu'ils satisfassent les caractéristiques techniques évoquées précédemment permettant de contraindre l'assemblage des éléments de frise selon un axe temporel, et de libérer - dans une certaine mesure évoquée précédemment - les contraintes d'assemblage des éléments de frise selon un axe thématique.

La FIGURE 1 montre que la languette 14 formée par le troisième organe d'emboitement 13 a une forme en arc de cercle 23. L'évidement 16 formé par le quatrième organe d'emboitement 15 a une forme en arc de cercle complémentaire 24.

La FIGURE 1 montre que la saillie 10 formée par le premier organe d'emboitement 9 a une surface formée d'un premier polygone 25. Le renfoncement 12 formé par le deuxième organe d'emboitement 11a une surface formée d'un deuxième polygone 26 distinct du premier polygone 25. En l'espèce, le premier polygone 25 forme un triangle. Le deuxième polygone 26 forme un pentagone.

La FIGURE 2 illustre un ensemble chronologique 27, 28, 29, 30 conforme au deuxième aspect de l'invention. L'ensemble chronologique 27, 28, 29, 30 comporte une pluralité d'éléments 1, 2 de frise conformes au premier aspect de l'invention, en l'espèce un premier élément 1 de frise et un deuxième élément 2 de frise. Dans un même ensemble chronologique 27, 28, 29, 30 tel que représenté en FIGURE 2, la pluralité d'éléments 1, 2 de frise s'assemblent horizontalement selon un axe temporel. Le premier élément 1 de frise conforme au premier aspect de l'invention correspond à l'élément de frise 1, 2 tel qu'illustré en FIGURE 1.

Le deuxième élément 2 de frise conforme au premier aspect de l'invention est tel que l'élément 1, 2 de frise décrit en FIGURE 2, à l'exception des formes du premier organe d'emboitement 9, du deuxième organe d'emboitement 11, du troisième organe d'emboitement 13 et du quatrième organe d'emboitement 15.

La languette 14 formée par le troisième organe d'emboitement 13 du deuxième élément 2 de frise a une surface formée d'un troisième polygone 31 distinct du premier polygone 25 et du deuxième polygone 26. L'évidement 16 formé par le quatrième organe d'emboitement 15 du deuxième élément 2 de frise a une forme complémentaire au troisième polygone 31. La saillie 10 formée par le premier organe d'emboitement 9 du deuxième élément 2 de frise a une surface formée d'un quatrième polygone 32 distinct du premier polygone 25, du deuxième polygone 26, et du troisième polygone 31. Le renfoncement 12 formé par le deuxième organe d'emboitement 11 du deuxième élément 2 de frise a une forme complémentaire au premier polygone 25.

En l'espèce, le troisième polygone 31 forme un carré. Le quatrième polygone 32 forme un hexagone.

Le premier élément 1 de frise conforme au premier aspect de l'invention est destiné à être assemblé au deuxième élément 2 de frise par la collaboration des formes complémentaires du premier organe d'emboitement 9 du premier élément 1 de frise et du deuxième organe d'emboitement 11 du deuxième élément 2 de frise. Dans l'ensemble chronologique 27, 28, 29, 30 conforme au deuxième aspect de l'invention, les éléments 1, 2 de frise chronologique 100 sont contraints dans leur assemblage. En ce sens, seul le premier organe d'emboitement 9 du premier élément 1 de frise peut collaborer avec le deuxième organe d'emboitement 11 du deuxième élément 2 de frise.

La FIGURE 2 montre que le système d'assemblage 4 comporte un système de fixation temporaire 33 configuré pour permettre de fixer de manière détachable le premier organe d'emboitement 9 avec le deuxième organe d'emboitement 11. En l'espèce, le système de fixation temporaire 33 est de type velcro, avec bande à fixation mécanique par crochets 34 et boucles 35 textiles.

La FIGURE 3, la FIGURE 4 et la FIGURE 6 illustrent la frise chronologique 100 conforme au troisième aspect de l'invention selon deux variantes de réalisation distinctes. Dans les FIGURES 3, 4 et 6, la frise chronologique 100 comporte une pluralité d'ensembles chronologiques 27, 28, 29, 30 conformes au deuxième aspect de l'invention. En l'espèce, la frise chronologique 100 conforme au troisième aspect de l'invention comprend deux ensembles chronologiques 27, 28, un premier ensemble chronologique 27 et un deuxième ensemble chronologique 28. Chaque ensemble chronologique 27, 28 est délimité par un cadre pointillé. Chaque ensemble chronologique 27, 28 est destiné à caractériser une thématique donnée pour une région géographique.

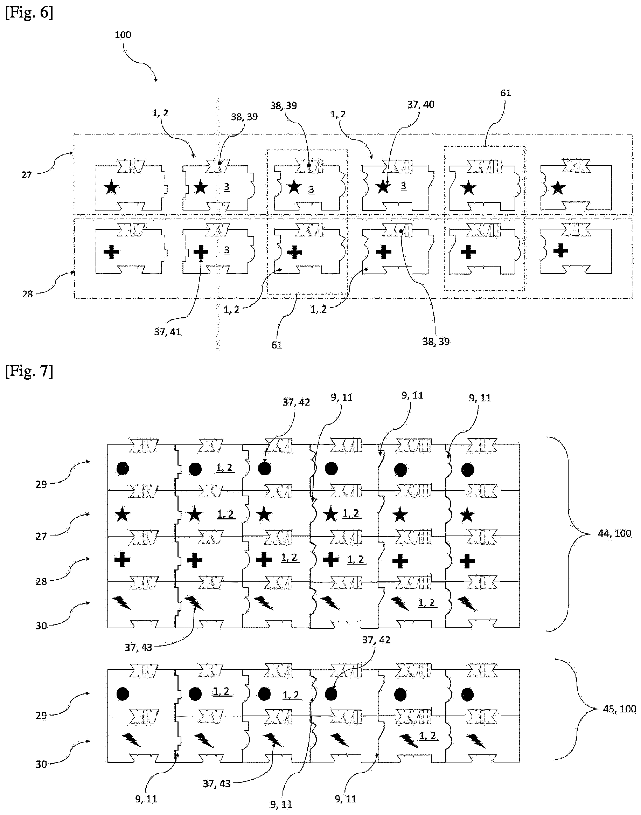

Dans la frise chronologique 100 conforme au troisième aspect de l'invention, les éléments 1, 2 de frise caractérisant une même période temporelle s'assemblent verticalement. La FIGURE 6 montre un encadré 61 distinguant éléments 1, 2 de frise caractérisant une même période temporelle.

Dans la FIGURE 3, la FIGURE 4 et la FIGURE 6 les troisièmes organes d'emboitement 13 des premiers éléments 1 de frise et les quatrièmes organes d'emboitement 15 des premiers éléments 1 de frise sont destinés à être centrés relativement au même axe 17. Il en est de même pour le deuxième élément 2 de frise, avec un axe 17 non représenté sur les deuxièmes éléments 2 de frise.

Chaque élément 1, 2 de frise du premier ensemble chronologique 27 est destiné à être assemblé aux éléments 1, 2 de frise du deuxième ensemble chronologique 28 directement adjacent. Plus particulièrement, chaque premier élément 1 de frise du premier ensemble chronologique 27 est destiné à être assemblé avec le premier élément 1 de frise du deuxième ensemble chronologique 28. Chaque deuxième élément 2 de frise du premier ensemble chronologique 27 est destiné à être assemblé avec le deuxième élément 2 de frise du deuxième ensemble chronologique 28.

Le troisième organe d'emboitement 13 du premier élément 1 de frise du premier ensemble chronologique 27 est destiné à être assemblé avec le quatrième organe d'emboitement 15 du premier élément 1 de frise du deuxième ensemble chronologique 28. Le troisième organe d'emboitement 13 du deuxième élément 2 de frise du premier ensemble chronologique 27 est destiné à être assemblé avec le quatrième organe d'emboitement 15 du deuxième élément 2 de frise du deuxième ensemble chronologique 28.

Comme visible dans l'exemple de réalisation illustré sur la FIGURE 3, le premier organe d'emboitement 9 du premier élément 1 de frise du premier ensemble chronologique 27 et le deuxième organe d'emboitement 11 du deuxième élément 2 de frise du premier ensemble chronologique 27 sont différents du premier organe d'emboitement 9 du premier élément 1 de frise du deuxième ensemble chronologique 28 et du deuxième organe d'emboitement 11 du deuxième élément 2 de frise du deuxième ensemble chronologique 28. De façon particulière, pour une frise chronologique donnée, tous les premiers organes d'emboitement 9 de tous les ensembles chronologiques 27, 28 sont différents et tous les deuxièmes organes d'emboitement 11 de tous les ensembles chronologiques 27, 28 sont différents. Cette distinction permet de différencier les deux ensembles chronologiques 27, 28 et d'empêcher d'assembler un élément de frise 1, 2 du premier ensemble chronologique 27 avec des éléments de frises 1, 2 du deuxième ensemble chronologique 28. Autrement dit, cette distinction permet de différencier des thématiques d'une frise chronologique 100 pour différentes régions géographiques d'une frise chronologique 100.

Comme visible dans l'exemple de réalisation illustré sur la FIGURE 4, le premier organe d'emboitement 9 du premier élément 1 de frise du premier ensemble chronologique 27 et le deuxième organe d'emboitement 11 du premier élément 1 de frise du premier ensemble chronologique 27 sont respectivement identiques au premier organe d'emboitement 9 du deuxième élément 2 de frise du deuxième ensemble chronologique 28 et au deuxième organe d'emboitement 11 du deuxième élément 2 de frise du deuxième ensemble chronologique 28. Les deux ensembles chronologiques 27, 28 sont indifférenciables par la forme de leurs premiers organes d'emboitement 9 et leurs les deuxièmes organes d'emboitement 11, contrairement à ce qui est illustré en FIGURE 3. La distinction entre les ensembles chronologiques 27, 28 se fait par la face supérieure 19 de l'élément 1, 2 de frise qui est illustrée d'illustrations spécifiques et/ou qui comprend un signe distinctif 37 permettant d'identifier son placement dans la frise chronologique 100 et/ou par rapport aux ensembles chronologiques 27, 28.

Les illustrations comprennent un signe distinctif 37 caractérisant la thématique. Le signe distinctif 37 caractérisant la thématique prend la forme d'un signe graphique. En l'espèce, le premier ensemble chronologique 27 est illustré par un signe graphique sous forme de points et le deuxième ensemble chronologique 28 est illustré par un signe graphique sous forme de hachures.

La FIGURE 5 montre que le système d'assemblage 4 est configuré pour assurer un emboitement autobloquant au niveau du troisième organe d'emboitement 13 et du quatrième organe d'emboitement 15. Le système d'assemblage 4 de l'élément de frise comprend un signe distinctif 38 caractérisant une période temporelle. Le troisième organe d'emboitement 13 et le quatrième organe d'emboîtement forment chacun un contour 381 du signe distinctif 38 caractérisant la période temporelle. En l'espèce, le contour 381 du signe distinctif 38 caractérisant la période temporelle prend la forme d'un chiffre romain 39. Ce chiffre romain 39 illustre un siècle, le XVème siècle dans la FIGURE 5.

La face supérieure 19 de l'élément 1, 2 de frise comprend une illustration 60. Cette illustration 60 comprend le signe distinctif 38 caractérisant la période temporelle. L'illustration 60 complète le contour 381 formé par le troisième organe d'emboitement 13. L'illustration 60 prend la forme du chiffre romain XV dans la FIGURE 5.

La FIGURE 5 montre que le système d'assemblage 4 comprend un deuxième organe d'emboitement 11 et un premier organe d'emboitement 9 dont la surface a une forme complexe. En l'espèce, le premier organe d'emboitement 9 a une surface délimitée à la fois par des lignes et des courbes. Le deuxième organe d'emboitement 11 a une surface délimitée à la fois par des lignes perpendiculaires deux à deux.

La FIGURE 6 illustre la frise chronologique 100 conforme au troisième aspect de l'invention selon une troisième variante de réalisation, dans laquelle les éléments 1, 2 de frise correspondent à celui décrit en FIGURE 5. Les éléments 1, 2 de frise conformes au premier aspect de l'invention sont non assemblés.

Chaque élément 1, 2 de frise se distingue par le signe distinctif 38 caractérisant la période temporelle et par un signe distinctif 37 caractérisant la thématique d'une région géographique donnée.

Chaque ensemble chronologique 27, 28 conforme au deuxième aspect de l'invention comprend un élément 1, 2 de frise ayant pour signe distinctif 38 caractérisant la période temporelle un chiffre romain 39. Chaque chiffre romain 39 illustre un siècle. En l'espèce, le XIVème siècle, le XVème siècle, le XVIème siècle, XVIIème siècle, XVIIIème siècle et XIXème siècle sont représentés.

Chaque ensemble chronologique 27, 28 se distingue par le signe distinctif 37 caractérisant sa propre thématique de sa région géographique. Le signe distinctif 37 est illustré au niveau de sa base 3. En l'espèce, le signe distinctif 37 caractérisant la thématique de la région géographique correspondante comprend un signe graphique formé d'une étoile 40 marque le premier ensemble chronologique 27. Un signe graphique formé d'une croix 41 marque le deuxième ensemble chronologique 28. Dans ce mode de réalisation, les premiers et deuxièmes organes d'emboitement 9, 11 des éléments de frise 1, 2 d'une période temporelle donnée sont identiques pour tous les ensembles chronologiques 27, 28 : un premier élément de frise 1 d'un premier ensemble chronologique 27 et pour une première période temporelle peut alors être assemblé avec un deuxième élément de frise 2 d'une deuxième période temporelle adjacente à la première période temporelle et d'un deuxième ensemble chronologique 28. Bien entendu, cet assemblage n'est pas souhaité, et le signe distinctif 37 présent sur chaque élément de frise 1, 2 et caractérisant la thématique de la région géographique de chaque ensemble chronologique 27, 28 conduirait l'utilisateur à ne pas réaliser de tels assemblages hétérogènes. Cependant, cette configuration avantageuse présente un intérêt de simplicité et de réduction des coûts de fabrication.

De manière préférentielle, les premiers et deuxièmes organes d'emboitement 9, 11 des éléments de frise 1, 2 d'une période temporelle donnée et d'un ensemble chronologique 27, 28 donné sont différentes de ceux de tous les autres ensembles chronologiques 27, 28 : un premier élément de frise 1 d'un ensemble chronologique 27 et pour une première période temporelle ne peut alors être assemblé qu'avec un deuxième élément de frise 2 d'une deuxième période temporelle adjacente à la première période temporelle et du même ensemble chronologique 27. Les autres éléments de frise 1, 2 de la même deuxième période temporelle mais issus d'autres ensembles chronologiques 27, 28 ne sont pas configurés pour être emboitables avec lui : ils diffèrent par leurs formes et/ou leurs dimensions et/ou leurs position, comme représenté sur la FIGURE 3 par exemple. Dans ce mode de réalisation, il est possible de représenter sur chaque élément de frise 1, 2 le signe distinctif 37 caractérisant la thématique de la région géographique de chaque ensemble chronologique 27, 28 afin de faciliter l'identification des ensembles chronologiques 27, 28 et de faciliter l'assemblage des éléments de frise 1, 2 entre eux.

La FIGURE 7 illustre la frise chronologique 100 conforme au troisième aspect de l'invention de la FIGURE 6 dans deux configurations distinctes parmi une multitude possible. Les éléments 1, 2 de frise conformes au premier aspect de l'invention sont assemblés.

Une première configuration 44 correspond à un assemblage de quatre ensembles chronologiques 27, 28, 29, 30 distincts. De haut en bas, la frise chronologique 100 conforme au troisième aspect de l'invention dans sa première configuration comprend un troisième ensemble chronologique 29, le premier ensemble chronologique 27, le deuxième ensemble chronologique 28, et un quatrième ensemble chronologique 30. Le signe distinctif 37 caractérisant la thématique de la région géographique correspondante est formé d'un cercle 42 et marque le troisième ensemble chronologique 29. Le signe distinctif 37 caractérisant la thématique de la région géographique correspondante est formé d'un éclair 43 et marque le quatrième ensemble chronologique 30.

Une deuxième configuration 45 correspond à un assemblage de deux ensembles chronologiques 29, 30 distincts. De haut en bas, la frise chronologique 100 conforme au troisième aspect de l'invention dans sa deuxième configuration 45 comprend le troisième ensemble chronologique 29 et le quatrième ensemble chronologique 30.

Dans les deux configurations 44, 45, la chronologie des siècles est respectée grâce à l'assemblage spécifique des premiers organes d'emboitement 9 avec les deuxièmes organes d'emboitement 11.

Le premier ensemble chronologique 27, le deuxième ensemble chronologique 28, le troisième ensemble chronologique 29 et le quatrième ensemble chronologique 30 conformes au deuxième aspect de l'invention peuvent être assemblés les uns avec les autres, sans contrainte d'ordre autre que la concordance temporelle comme le montrent les configurations 44 et 45. Autrement dit, le positionnement chaque élément 1, 2 de frise est libre grâce aux organes d'emboitement verticaux, et le positionnement de chaque élément 1, 2 de frise est contraint par les organes d'emboitement horizontaux.

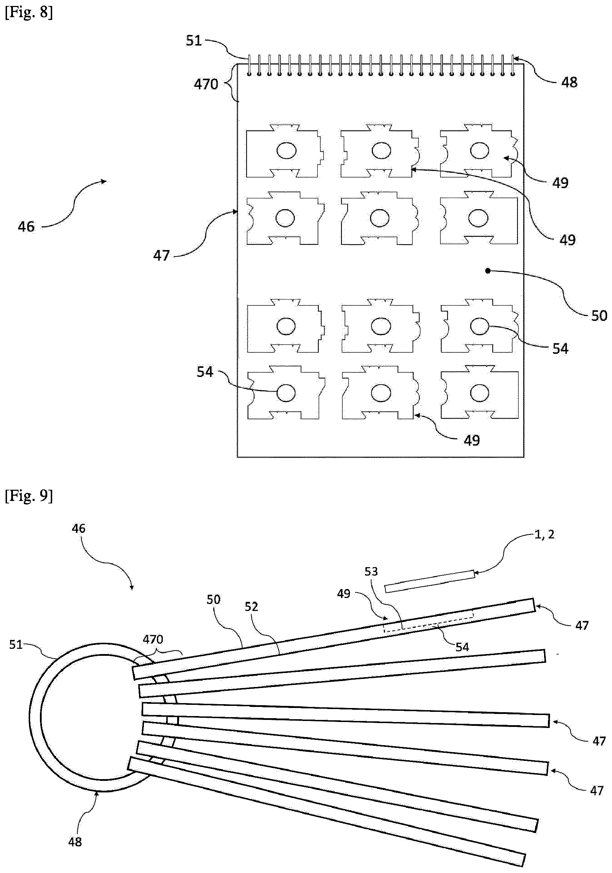

Les FIGURES 8, 9 et 10 illustrent un support 46, conforme au quatrième aspect de l'invention, pour ensemble chronologique 27, 28, 29, 30.

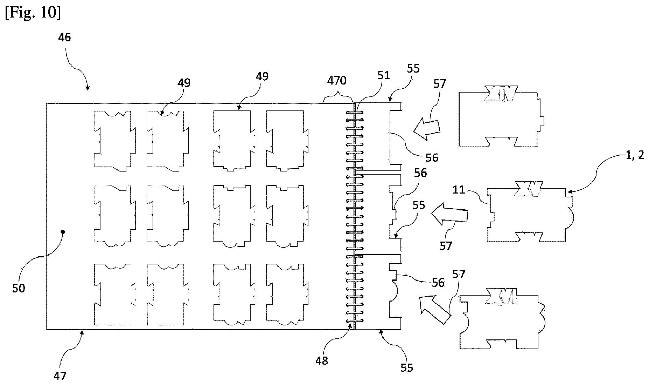

Le support 46 comprend une pluralité de planches 47 assemblées les unes aux autres par un organe de fixation 48 des planches 47. Les FIGURES 8 et 10 illustrent une seule des planches 47, vue depuis une face supérieure 50 de la planche 47.

Chaque planche 47 du support 46 comprenant au moins un logement 49 configuré pour loger un élément 1, 2 de frise conforme au premier aspect de l'invention. En l'espèce, le support 46 est configuré pour ranger deux ensembles chronologiques 27, 28, 29, 30, non représentés, pour six éléments 1, 2 de frise chacun. Il comprend douze logements 49 chacun spécifiques d'un des éléments 1, 2 de frise. Une telle planche 47 permet d'avoir une meilleure visibilité des éléments 1, 2 de frise d'un même ensemble chronologique 27, 28, 29, 30. Les logements 49 sont disposés à intervalle régulier sur la planche 47.

L'organe de fixation 48 des planches 47 prend la forme d'une reliure 51 en spirale hélicoïdale. L'organe de fixation 48 des planches 47 est avantageusement disposé sur une bordure supérieure 470 de la planche 47.

La FIGURE 9 illustre le support 46 de la FIGURE 8 selon un autre angle de vue. Six planches 47 sont assemblées au niveau de leur bordure supérieure 470. Seul un des logements 49 est représenté par transparence et permet de loger l'élément 1, 2 de frise.

Chaque planche 47 comprend la face supérieure 50 et une face inférieure 52 opposée. Le logement 49 s'étend depuis la face supérieure 50 de la planche 47 jusqu'à un fond 53 du logement 49. Le fond 53 du logement 49 est compris entre la face supérieure 50 de la planche 47 et la face inférieure 52 de la planche 47, et s'étend parallèlement à la face supérieure 50 de la planche 47.

Le support 46 illustré en FIGURE 8 et 9 comprend une ouverture 54 circulaire, centrée sur le fond 53 du logement 49. Cette ouverture 54 est dimensionnée pour permettre à un utilisateur d'opérer une poussée avec le doigt sur l'élément 1, 2 de frise lorsqu'il est logé dans le logement 49. L'ouverture 54 permet de déloger facilement ledit élément 1, 2 de frise.

La FIGURE 10 illustre le support 46 qui comprend une souche 55 assemblée à la pluralité de planches 47 par l'organe de fixation 48. La souche 55 comprend une amorce d'emboitement 56 configurée pour amorcer l'assemblage d'un des éléments 1, 2 de frise au niveau de son deuxième organe d'emboitement 11. En l'espèce, trois souches 55 sont représentées. Chaque souche 55 est configurée pour s'emboiter spécifiquement avec l'un des éléments 1, 2 de frises comme illustré par des flèches 57. Chaque souche 55 est indépendante des autres souches 55. Ainsi, il est possible d'assembler verticalement d'autres éléments 1, 2 de frises à un éléments 1, 2 de frise qui est emboité dans l'amorce d'emboitement 56 de l'une des souches 55.

En synthèse, l'invention concerne un élément 1, 2 d'une frise chronologique 100 comportant plusieurs éléments 1, 2 de frise à assembler les uns avec les autres. L'élément 1, 2 de frise comportant une base 3 à quatre côtés 5, 6, 7, 8 et un système d'assemblage 4 périphérique à quatre organes d'emboitement 9, 11, 13, 15. Un premier organe d'emboitement 9 et un deuxième organe d'emboitement 11 sont situés respectivement sur un premier côté 5 et un deuxième côté 6. Un troisième organe d'emboitement 13, en forme de languette 14, est en saillie d'un troisième côté 7. Un quatrième organe d'emboitement 15 est en forme d'évidement 16 ménagé dans un quatrième côté 8 et est complémentaire de la languette 14. La languette 14 s'étend en saillie du troisième côté 7 et l'évidement 16 est formé à partir du quatrième côté 8.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Élément (1, 2) d'une frise chronologique (100) comportant plusieurs éléments (1, 2) de frise à assembler les uns avec les autres, l'élément (1, 2) de frise comportant une base (3) et un système d'assemblage (4) situé en périphérie de la base (3), le système d'assemblage (4) comprenant :
- un premier organe d'emboitement (9) et un deuxième organe d'emboitement (11) situés respectivement sur un premier côté (5) et deuxième côté (6) de la base (3) ;
- un troisième organe d'emboitement (13) situé sur un troisième côté (7) de la base (3), le troisième organe d'emboitement (13) prenant la forme d'une languette (14) qui s'étend en saillie du troisième côté (7) ;
- un quatrième organe d'emboitement (15) situé sur un quatrième côté (8) de la base (3), le quatrième organe d'emboitement (15) prenant la forme d'un évidement (16) formé à partir du quatrième côté (8), le quatrième organe d'emboitement (15) autorisant un engagement du troisième organe d'emboitement (13) d'un premier élément (1) de frise avec le quatrième organe d'emboitement (15) d'un deuxième élément (2) de frise.

2. Élément (1, 2) de frise selon la revendication précédente, dans lequel l'évidement (16) formant le quatrième organe d'emboitement (15) a une forme analogue à celle de la languette (14) formant le troisième organe d'emboitement (13) afin de collaborer par emboitement.

3. Élément (1, 2) de frise selon la revendication précédente, dans lequel le troisième organe d'emboitement (13) et le quatrième organe d'emboitement (15) sont centrés relativement à un même axe (17) simultanément perpendiculaire au troisième côté (7) et au quatrième côté (8) de l'élément (1, 2) de frise.

4. Élément (1, 2) de frise selon l'une quelconque des revendications précédentes, dans lequel le système d'assemblage (4) est configuré pour assurer un emboitement autobloquant d'un premier élément (1) de frise avec un deuxième élément (2) de frise.

5. Élément (1, 2) de frise selon l'une quelconque des revendications précédentes, dans lequel le système d'assemblage (4) comporte un système de fixation temporaire (33) configuré pour permettre de fixer de manière détachable le premier organe d'emboitement (9) avec le deuxième organe d'emboitement (11) et/ou pour permettre de fixer de manière détachable le troisième organe d'emboitement (13) avec le quatrième organe d'emboitement (15).

6. Élément (1, 2) de frise selon la revendication précédente, dans lequel le système de fixation temporaire (33) est du type adhésif ou magnétique ou velcro.

7. Élément (1, 2) de frise selon l'une quelconque des revendications précédentes, dans lequel une face supérieure (19) de l'élément (1, 2) de frise est recouverte d'un film protecteur transparent (21).

8. Ensemble chronologique (27, 28, 29, 30) comportant une pluralité d'éléments (1, 2) de frise selon l'une quelconque des revendications précédentes, un premier élément (1) de frise étant assemblé à un deuxième élément (2) de frise directement adjacent par collaboration de formes complémentaires de leurs premiers organes d'emboitement (9) et deuxièmes organes d'emboitement (11) respectifs.

9. Frise chronologique (100) comportant une pluralité d'ensembles chronologiques (27, 28, 29, 30) selon la revendication précédente, chaque élément (1, 2) de frise d'un premier ensemble chronologique (27) étant assemblé aux éléments (1, 2) de frise d'un deuxième ensemble chronologique (28) directement adjacent par collaboration de formes complémentaires de leurs troisièmes organes d'emboitement (13) et quatrièmes organes d'emboitement (15) respectifs.
